# EUROPÄISCHE PATENTSCHRIFT

(11) **EP 0 518 328 B1**
(45) Veröffentlichungstag und Bekanntmachung des Hinweises auf die Patenterteilung: **19.04.1995**
(21) Anmeldenummer: 92109847.1
(22) Anmeldetag: 11.06.1992
(51) Int. Cl.: B65G 47/40

(54) **Entladestation für ein Pendelbecherwerk**
Unloading station for pivoting trays
Station de déchargement pour balancelles

(30) Priorität: 11.06.1991 DE 4119258; 24.07.1991 DE 4124568
(43) Veröffentlichungstag der Anmeldung: 16.12.1992
(73) Patentinhaber: HUMBERT und VAN DEN POL GmbH & Co. KG, 49326 Melle (DE)
(72) Erfinder: Greber, M.A. Hans Georg, W-4804 Versmold (DE)
(74) Vertreter: Zinnecker, Armin, Dipl.-Ing.

(56) Entgegenhaltungen:
- DE-A- 1 803 828
- DE-B- 2 546 748
- DE-C- 227 983
- DE-C- 3 311 544

## Beschreibung

Die Erfindung betrifft eine Entladestation für ein Pendelbecherwerk (Becherförderer, Pendelbecher-Förderanlage) nach dem Oberbegriff des Anspruchs 1. Bei dem Pendelbecherwerk sind Pendelbecher an mindestens einem Zugglied um eine horizontale, über dem Schwerpunkt der Pendelbecher liegende Achse drehbar aufgehängt. Die Entladestation besteht aus einem Hebel, der um eine gestellfest angeordnete Hebel-Drehachse drehbar gelagert ist. Auf dem Hebel ist im Abstand von der Hebel-Drehachse ein Zapfen angeordnet.

Eine Entladestation nach dem Oberbegriff des Anspruchs 1 ist aus der DE-B-25 46 748 bekannt. Der vorbekannte Becherförderer besitzt zwei seitliche endlose Zugglieder, zwischen denen pendelnd um eine Achse quer zur Richtung der Zugglieder Becher gelagert sind, die jeweils seitlich eine Steuerkurve aufweisen, die mit einem Steuerglied zum Kippen der Becher zusammenwirkt, das ortsfest angeordnet und in die Bewegungs- bahn der Steuerkurve bewegbar ist. Das Steuerglied ist als Steuerzapfen, insbesondere als Steuerrolle, ausgebildet, der bzw. die bis in die Nähe der Pendelachse des Bechers bewegbar ist. Die Steuerkurve erstreckt sich von einem radial von der Pendelachse entfernt und in Förderrichtung des Bechers vorn und oberhalb der Pendelachse liegenden Punkt zur Pendelachse hin schräg nach unten. Hierdurch soll ein teilweises Auskippen von Bechern, ein abruptes Anstoßen von Teilen und somit auch ein Bruch schwacher Zapfen vermieden werden. Der Steuerzapfen bzw. die Steuerrolle gleiten bzw. rollen an der auf dem Becher vorgesehenen Steuerkurve ab.

Obwohl durch die in der DE-B-25 46 748 offenbarte Lösung bereits eine Verbesserung gegenüber dem in dieser Patentschrift beschriebenen Stand der Technik erreicht wird, lassen die Ergebnisse immer noch zu wünschen übrig, insbesondere hinsichtlich der beim Verschwenken der Pendelbecher auftretenden Drehbeschleunigungen.

Aus der DE-A-1803828 ist ein Pendelbecherwerk bekannt, das eine Kippstation aufweist, bei der eine an der Vorderseite der Pendelbecher angebrachte Vorkippnase mit einem in der Kippstation zum Zwecke des Vorkippens der Becher kippbeweglich angeordneten Vorkipphebel zusammenwirkt. Um eine einseitige stärkere Beanspruchung der Becherkette und ein Windschiefwerden der Becher auszuschließen, ist in der Kippstation ein Hauptkipphebel kippbeweglich angeordnet, der mit der Vorderkante des Bechers zusammenwirkt.

Aufgabe der Erfindung ist es, bei einer Entladestation für ein Pendelbecherwerk nach dem Oberbegriff des Anspruchs 1 die Drehbeschleunigung des Pendelbechers beim Kippen zu vergleichmäßigen.

Erfindungsgemäß wird diese Aufgabe durch die im kennzeichnenden Teil des Anspruchs 1 angegebenen Merkmale gelöst. Der an dem Hebel vorgesehene Zapfen ist mit einer an dem Pendelbecher vorgesehenen, den Zapfen umgreifenden Klaue in Eingriff bringbar. Hierdurch werden unkontrollierte und ungleichmäßige Drehbeschleunigungen des Pendelbechers beim Kippen vermieden. Es findet eine günstige Kraftübertragung beim Kippen des Pendelbechers statt. Der Pendelbecher kann vollständig gekippt werden. Weiterhin können verschiedene Kippstellen nahe beieinander angeordnet werden, da die erfindungsgemäße Entladestation nur sehr wenig Platz in Pendelbecher-Förderrichtung benötigt.

Bei der erfindungsgemäßen Lösung bilden die oberhalb der Pendelbecher-Drehachse angeordnete Hebel-Drehachse, der Hebel, der Zapfen, die Klaue und die Geradführung des Pendelbechers bzw. der Pendelbecher-Drehachse durch das Zugglied ein Kurbelgetriebe mit Geradführung in Form einer Schubkurbel. Es wird Bezug genommen auf Leo Hagedorn, Konstruktive Getriebelehre - Grundbegriffe, Gelenkgetriebe, Kurvengetriebe, Aufgaben, Hermann Schroedel Verlag KG, Berlin, Hannover, Darmstadt, erste Auflage 1960, insbesondere Abbildung B 27d. Bei der Erfindung umgreift die am Pendelbecher vorgesehene Klaue den als Gelenk wirkenden Zapfen des Hebels; sie wirkt mit diesem in der Weise zusammen, daß der Pendelbecher um seine Drehachse gedreht, also gekippt wird. Für den Zeitraum des Zusammenwirkens von Klaue und Zapfen (Gelenk) bilden diese zusammen mit der Hebel-Drehachse, dem Hebel und der Pendelbecher-Drehachse ein geschlossenes kinematisches System, welches einem Kurbelgetriebe mit Geradführung entspricht.

Vorteilhafte Weiterbildungen der Erfindung sind in den Unteransprüchen beschrieben.

Vorzugsweise ist der Zapfen als drehbar gelagerte Rolle ausgebildet. Beim Eingriff des Zapfens in die Klaue und beim anschließenden Kippen des Pendelbechers wirkt dann zwischen dem als Rolle ausgebildeten Zapfen und der Klaue nicht eine Gleitreibung, sondern nur eine (geringere) Rollreibung.

Vorzugsweise ist die Klaue halbkreisförmig ausgebildet. Sie ist in der unverschwenkten Stellung des Pendelbechers zum Zapfen hin offen und als "Halbschale" ausgebildet.

Vorzugsweise ist die Klaue oberhalb der Pendelbecher-Drehachse angeordnet. Nach einer weiteren vorteilhaften Weiterbildung liegen die Hebel-Drehachse und der Zapfen (und damit auch die Klaue) in derselben Höhe. Bei waagrecht verlaufendem Zugglied verläuft also auch der Hebel (bzw. die Verbindungslinie von der Hebel-Drehachse zu dem Zapfen) waagerecht.

Der Zapfen kann aus der Bewegungsbahn der Klaue weg bewegbar, also ausrückbar, sein. Hierdurch ist es möglich, einen Pendelbecher wahlweise zu kippen oder nicht.

Der Hebel kann an einem unter dem Hebel vorgesehenen Anschlag anliegen. Vorzugsweise ist der Hebel durch eine Feder nach unten belastet. Diese Feder drückt den Hebel gegen den Anschlag.

Der Anschlag kann in seiner Lage veränderbar sein. Hierdurch kann der Anschlag dazu benutzt werden, den Zapfen aus der Bewegungsbahn der Klaue weg zu bewegen, also den Zapfen auszurücken. Vorzugsweise wird der Anschlag von der beweglichen Stange einer Kolben-Zylinder-Einheit oder eines Magnetventils oder einer sonstigen Betätigungsvorrichtung gebildet.

Nach einer weiteren vorteilhaften Weiterbildung ist der Zapfen nur dann aus der Bewegungsbahn der Klaue weg bewegbar (ausrückbar) bzw. in die Bewegungsbahn der Klaue bewegbar (einrückbar), wenn sich der Pendelbecher an einer vorherbestimmten Position befindet. An dem Gestell der Entladestation können einer oder mehrere Positionssensoren, insbesondere induktive Näherungssensoren, zum Erkennen der für das Ausrücken und/oder Einrücken des Zapfens zulässigen Positionen angeordnet sein. Hierdurch kann ein fehlerhaftes Einrücken bzw. Ausrücken der Klaue in die Bewegungsbahn des Zapfens bzw. aus der Bewegungsbahn des Zapfens verhindert werden.

Die Erfindung betrifft weiterhin ein Pendelbecherwerk mit einer erfindungsgemäßen Entladestation.

Ein Ausführungsbeispiel der Erfindung wird nachstehend anhand der beigefügten Zeichnung im einzelnen beschrieben. In der Zeichnung zeigt
- Fig. 1: ein Pendelbecherwerk mit einer Entladestation in einer teilweise schematischen Seitenansicht,
- Fig. 2: einen Pendelbecher in einer Seitenansicht und in einer Schnittansicht längs der Linie II-II in Fig. 1,
- Fig. 3: einen Schaltplan für die Steuerung des Einrückens und Ausrückens des Zapfens in die Bewegungsbahn der Klaue,
- Fig. 4: eine andere Ausführungsform eines Pendelbecherwerkes mit einer Entladestation in einer teilweise schematischen Seitenansicht und
- Fig. 5: eine andere Ausführungsform einer Klaue in einer Draufsicht und in einer Seitenansicht.

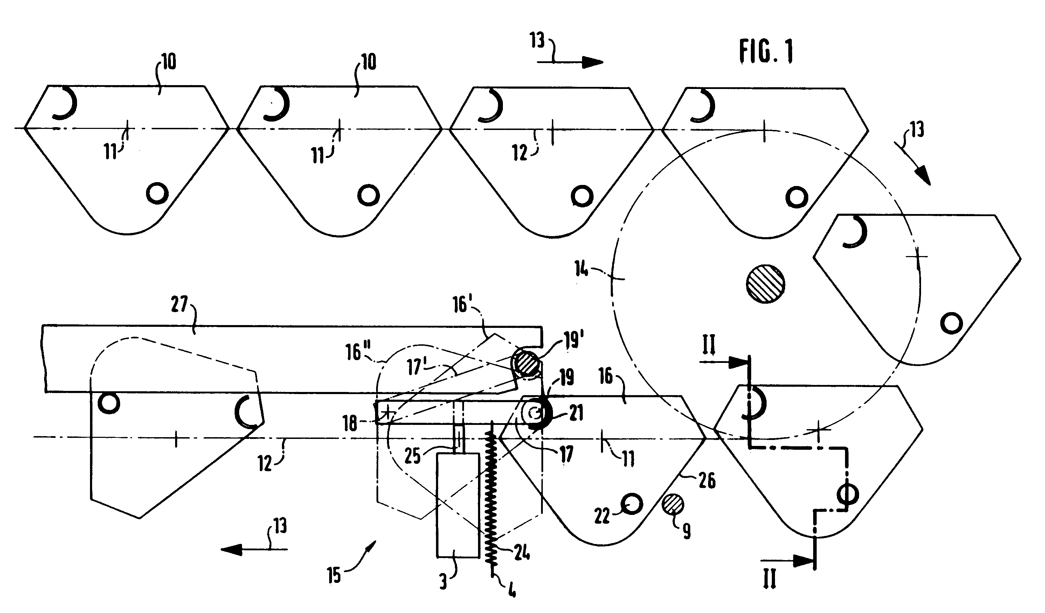

In der Fig. 1 ist ein Teil eines Pendelbecherwerks in einer Seitenansicht dargestellt. Die Pendelbecher 10 sind um eine horizontale, über ihrem Schwerpunkt liegende Pendelbecher-Drehachse 11 an einem Zugglied 12 drehbar aufgehängt. Das Zugglied besteht aus zwei Förderketten, die auf jeweils einer Seite der Pendelbecher 10 verlaufen. Die Pendelbecher werden in Pendelbecher-Förderrichtung 13 bewegt. Sie laufen über die Umlenkrolle 14 zu der insgesamt mit 15 bezeichneten Entladestation.

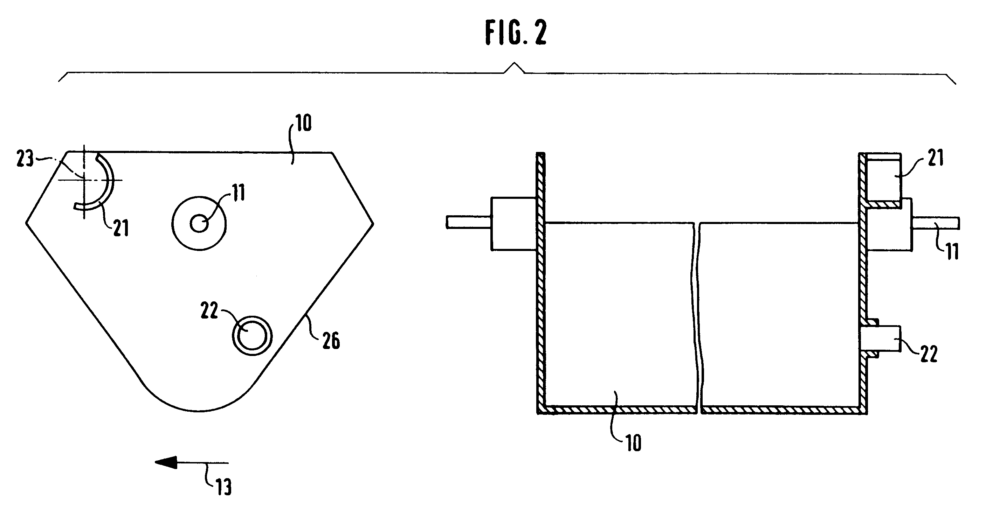

Jeder Pendelbecher 10 besitzt (siehe Fig. 2) eine Klaue 21, die oberhalb der Pendelbecher-Drehachse 11 und in Förderrichtung 13 vor dieser angeordnet ist. Die Klaue 21 ist im Querschnitt halbkreisförmig ausgebildet. Sie hat die Form eines Halbzylinders ("Halbschale"). Wie aus Fig. 2 ersichtlich, weist die Öffnung der Klaue 21 im wesentlichen in Förderrichtung und leicht schräg nach oben.

Die Entladestation 15 (Fig. 1) besteht aus einem Hebel 17, der um eine Hebel-Drehachse 18, die gestellfest angeordnet ist, drehbar gelagert ist. Im Abstand von der Hebel-Drehachse 18 ist auf dem Hebel 17 ein Zapfen 19 angeordnet, auf dem eine Rolle drehbar gelagert ist. Der Außendurchmesser der Rolle ist genauso groß wie der Innendurchmesser der Klaue 21. Die Hebel-Drehachse 18 ist oberhalb der Pendelbecher-Drehachse 11, also auch oberhalb des Zuggliedes 12, angeordnet. Die Hebel-Drehachse 18 und der Zapfen 19, genauer gesagt die Drehachse der auf dem Zapfen 19 drehbar gelagerten Rolle und damit auch der Mittelpunkt 23 der Klaue 21 liegen in derselben Höhe. Der Hebel 17 bzw. die Verbindungslinie zwischen der Hebel-Drehachse 18 und dem Mittelpunkt der auf dem Zapfen 19 gelagerten Rolle verlaufen also waagerecht und parallel sowie im Abstand (oberhalb) von dem Zugglied 12. Die Hebel-Drehachse 18 liegt in Pendelbecher-Förderrichtung 13 vor dem zu kippenden Pendelbecher 16.

An dem Hebel 17 ist eine Zugfeder 24 befestigt, deren anderes Ende an der mit 4 bezeichneten, unterhalb des Hebels 17 liegenden Stelle des Gestells befestigt ist. Unter dem Hebel 17 befindet sich weiterhin eine Kolben-Zylinder-Einheit 3, deren Gehäuse gestellfest angeordnet ist. Am oberen Ende der Stange 25 der Kolben-Zylinder-Einheit 3 liegt der Hebel 17 auf. Der Hebel 17 wird von der Zugfeder 24 zu der Stange 25 hin vorbelastet. Das obere Ende der Stange 25 der Kolben-Zylinder-Einheit 3 bildet einen Anschlag für den Hebel 17.

Die Funktionsweise der Entladestation 15 ist wie folgt: Der zu kippende Pendelbecher nimmt zunächst die mit 16 bezeichnete Stellung ein. In dieser Stellung gelangt die auf dem Zapfen 19 drehbar gelagerte Rolle mit der Klaue 21 in Eingriff. In der Folge wird der Hebel 17 um die Hebel-Drehachse 18 nach oben verschwenkt. Die Klaue 21 des Pendelbechers folgt der Bewegung des Zapfens 19 nach oben. Gleichzeitig wird die Pendelbecher-Drehachse 11 in Pendelbecher-Förderrichtung 13 weiterbewegt, und zwar durch das Zugglied 12. Die Hebel-Drehachse 18, der Hebel 17, der Zapfen 19, die Klaue 21 und die Pendelbecher-Drehachse 11 bilden ein Kurbelgetriebe mit Geradführung. Die höchste Stellung des Zapfens 19 und der mit diesem in Eingriff befindlichen Klaue 21 ist mit 19' bezeichnet. In dieser Stellung ist der Pendelbecher um 90° verschwenkt; er nimmt die mit 16' bezeichnete, strichpunktiert dargestellte Stellung ein. Durch die Weiterförderung des Pendelbechers durch das Zugglied 12 in Pendelbecher-Förderrichtung 13 wird der Hebel 17 wieder nach unten verschwenkt. Der Pendelbecher wird weiter gedreht, bis er die mit 16'' bezeichnete, ebenfalls strichpunktiert dargestellte, vollständig gekippte Stellung einnimmt, in der die hintere Wand 26 des Pendelbechers senkrecht nach unten verläuft, so daß der Inhalt des Pendelbechers zuverlässig herausfällt. In dieser Stellung ist der Pendelbecher um 140° gekippt. Er kann durch die Gleitschiene 27, an der die Klaue 21 anliegt, in dieser gekippten Stellung gehalten werden.

Durch die Kolben-Zylinder-Einheit 3 ist es möglich, den Zapfen 19 aus der Bewegungsbahn der Klaue 21 heraus zu bewegen, den Zapfen 19 also auszurücken. Zu diesem Zweck wird der Hebel 17 in der nach oben verschwenkten, strichpunktiert gezeichneten Stellung 17' gehalten, und zwar dadurch, daß die Kolben-Zylinder-Einheit 3 deren Stange 25 in der nach oben ausgefahrenen Stellung hält. Der Hebel 17 bleibt hierdurch entgegen der Kraft der Zugfeder 24 in der strichpunktiert gezeichneten Stellung 17'. Ein Pendelbecher, der in die Entladestation 15 bewegt wird, wird dann nicht gekippt, da seine Klaue 21 jetzt mit dem Zapfen 19, der sich in der Stellung 19' befindet, nicht in Eingriff gelangen kann. Wenn die Entladestation wieder aktiviert werden soll, wird die Stange 25 der Kolben-Zylinder-Einheit 3 wieder eingefahren. Die Zugfeder 24 zieht den Hebel 17 dann wieder in seine Normalstellung, in der der Hebel 17 auf dem oberen Ende der Stange 25 aufliegt.

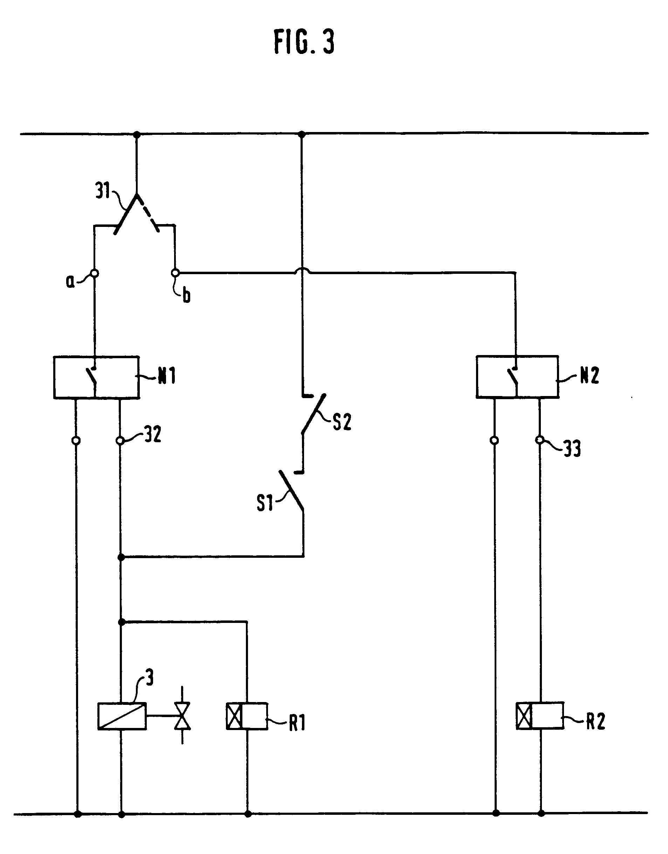

Damit der Hebel 17 und mit ihm der Zapfen 19 stets zur richtigen Zeit eingerückt bzw. ausgerückt wird, ist die in Fig. 3 dargestellte Steuerung vorgesehen. Wenn der Zapfen 19 ausgerückt werden soll, wird der Schalter 31 in die Position a gebracht. Der Näherungsschalter N1, der sich in Fig. 1 an der Stelle 19' befindet, gibt erst dann einen Impuls an seinen Ausgang 32, wenn sich der Zapfen 19 ebenfalls an der Stelle 19' befindet. Dadurch wird die Kolben-Zylinder-Einheit 3 betätigt, und die Stange 25 dieser Kolben-Zylinder-Einheit 3 wird nach oben in die in Fig. 1 strichpunktiert gezeichnete Stellung ausgefahren. Hierdurch wird der Hebel 17 in der in Fig. 1 gestrichelt gezeichneten Stellung 17' gehalten. Der Hebel 17 bleibt also ausgerückt.

Gleichzeitig wird das Relais R1 aktiviert, das mit dem Schalter S1 (Fig. 3) in Wirkverbindung steht (in der Zeichnung der Fig. 3 nicht dargestellt). Hierdurch bleibt der Schalter S1 geschlossen, die Kolben-Zylinder-Einheit 3 also im Sinne des Ausfahrens ihrer Stange 25 aktiviert.

Wenn der Hebel 17 zusammen mit seinem Zapfen 19 wieder eingerückt werden soll, wird der Schalter 31 in die Stellung b (in Fig. 3 strichpunktiert dargestellt) gebracht. Der zweite Näherungsschalter N2, der sich an der in Fig. 1 mit 9 bezeichneten Stelle am Gestell des Pendelbecherwerks befindet, gibt nur dann einen Impuls an seinen Ausgang 33, wenn sich der an einer Seitenwand des Pendelbechers 10 angeordnete Stift 22 an derselben Stelle befindet, wenn also zwischen dem zweiten Näherungssensor N2 bzw. 9 und dem Stift 22 eine Überdeckung besteht. Dann wird das zweite Relais R2 aktiviert, das mit dem zweiten Schalter S2 in Wirkverbindung steht (in Fig. 3 nicht dargestellt). Hierdurch wird der zweite Schalter S2 geöffnet und damit die Kolben-Zylinder-Einheit 3 deaktiviert. Die Stange 25 der Kolben-Zylinder-Einheit 3 fällt wieder nach unten, bis sie die in Fig. 1 durchgezogen gezeichnete, untere Stellung einnimmt. Durch die Kraft der Zugfeder 24 wird der Hebel 17 mit dem Zapfen 19 wieder nach unten in die aktivierte Stellung gebracht. Der nächste ankommende Pendelbecher wird gekippt und entleert.

Durch die Näherungssensoren N1 und N2 und die soeben beschriebene Steuerung gemäß Fig. 3 kann der Zapfen 19 nur dann aus der Bewegungsbahn der Klaue 21 weg und in die Bewegungsbahn der Klaue 21 hinein bewegt werden, wenn sich der zugehörige Pendelbecher an einer vorherbestimmten Position befindet. Die Näherungssensoren N1, N2 dienen zum Erkennen der für das Ausrücken bzw. Einrücken des Zapfens 19 zulässigen Positionen. Die Näherungssensoren N1 und N2 sind derart angeordnet, daß durch das Einrücken bzw. Ausrücken des Zapfens 19 keine Beschädigungen und keine Störungen auftreten können.

Insbesondere befindet sich der zweite Näherungssensor N2 bzw. 9 in einem relativ geringfügigen Abstand rechts (also entgegen der Pendelbecher-Förderrichtung 13) von derjenigen Stellung des Stiftes 22, die dieser Stift 22 einnimmt, wenn der Zapfen 19 mit der Klaue 21 in Eingriff gelangt (vgl. Fig. 1). Der zweite Näherungssensor befindet sich an derjenigen Stelle 19', die der Zapfen 19 einnimmt, wenn sich der Hebel 17 in seiner am weitesten nach oben verschwenkten Stellung 17' befindet.

Durch die Entladestation nach der Erfindung können folgende Nachteile vermieden bzw. folgende Vorteile erreicht werden:
Unkontrollierte und ungleichmäßige Drehbeschleunigungen des Pendelbechers beim Kippen werden vermieden. Die Winkelgeschwindigkeit der Dreh- bzw. Kippbewegung des Pendelbechers ist, abgesehen von einer kurzen Anfangsbeschleunigung beim Kraftschluß zwischen Klaue 21 und Zapfen (Gelenk) 19, im wesentlichen konstant. Der Grund hierfür liegt in der im wesentlichen gleichförmigen Geschwindigkeit der Geradführung des Pendelbechers.

Eine ungünstige Kraftübertragung beim Kippen des Pendelbechers wird vermieden. Pendelbecher entsprechen den physikalischen Eigenschaften von Pendeln. Das Kräfteparallelogramm zeigt, daß das Gewicht des Pendelbechers beim Kippen genau dann voll wirksam wird, wenn der Pendelbecher um 90° um seine Pendelbecher-Drehachse gekippt ist. Die konstruktive Gestaltung des Kurbelgetriebes mit Geradführung ist derart vorgenommen, daß bei einem Kippwinkel von etwa 90° der volle Hebelarm am Pendelbecher ausgenutzt wird. Dies führt dazu, daß die Kräfte, mit denen die Bauteile belastet werden und nach denen die Bauteile dimensioniert werden müssen, sehr gering bleiben. Zum Kippen eines Pendelbechers ist nämlich ein bestimmtes Drehmoment erforderlich. Nach der Erfindung ist ein sehr großer Hebelarm vorhanden, so daß zur Erzeugung des Kipp-Drehmoments nur verhältnismäßig geringe Kräfte erforderlich sind.

Ein unvollständiges Durchkippen des Bechers wird vermieden. Aufgrund der Position der Klaue 21 am Pendelbecher 10 (vgl. Fig. 2) wird der Becher um 140° gekippt, wobei diejenige schräge Wandung 26, auf der das Schüttgut beim Kippen aufruht, senkrecht nach unten zeigt (vgl. Stellung 16'' in Fig. 1).

Gewaltbrüche beim Ein- bzw. Ausrücken des Hebels 17 der Kippvorrichtung 15 während des laufenden Förderprozesses werden vermieden. Die elektro-pneumatische-Steuerung, die in Fig. 3 dargestellt ist, bewirkt, daß die Kippvorrichtung unabhängig vom Zeitpunkt des Schaltens, also der Betätigung des Schalters 31, in den laufenden Förderprozeß ein- bzw. ausrückt. Durch die Schaltung gemäß Fig. 3 wird nach einer Betätigung des Schalters 31 so lange abgewartet, bis der "richtige" Zeitpunkt für die Betätigung der Kolben-Zylinder-Einheit 3 erreicht ist. Der Schaltpunkt hängt von der Position des zu kippenden oder nicht zu kippenden Pendelbechers relativ zur Kippvorrichtung 15 ab. Diese Position des Pendelbechers wird durch zwei Meßpunkte 9, 19', die als induktive Näherungsschalter ausgebildet sind, definiert. Die Kippvorrichtung greift also kontrolliert in den laufenden Förderprozeß ein.

Zusätzlich kann ein elektronisches Zählwerk vorgesehen werden, welches genau "weiß", welcher Pendelbecher sich im Bereich der Kippvorrichtung 15 befindet. Mit Hilfe dieses zusätzlichen elektronischen Zählwerkes können die Pendelbecher sowohl einzeln als auch blockweise aus dem laufenden Produktionsprozeß herausgegriffen und gekippt werden.

Zu weite Entfernungen der Kippstellen durch zu große Baumaße der Kippvorrichtungen werden vermieden. Die Baumaße der Kippvorrichtung 15 sind so minimal, daß im Extremfall unter jeden Pendelbecher eine Kippstelle angeordnet werden kann, daß der Abstand der Kippvorrichtungen voneinander also genausogroß ist wie der Abstand der Pendelbecher voneinander.

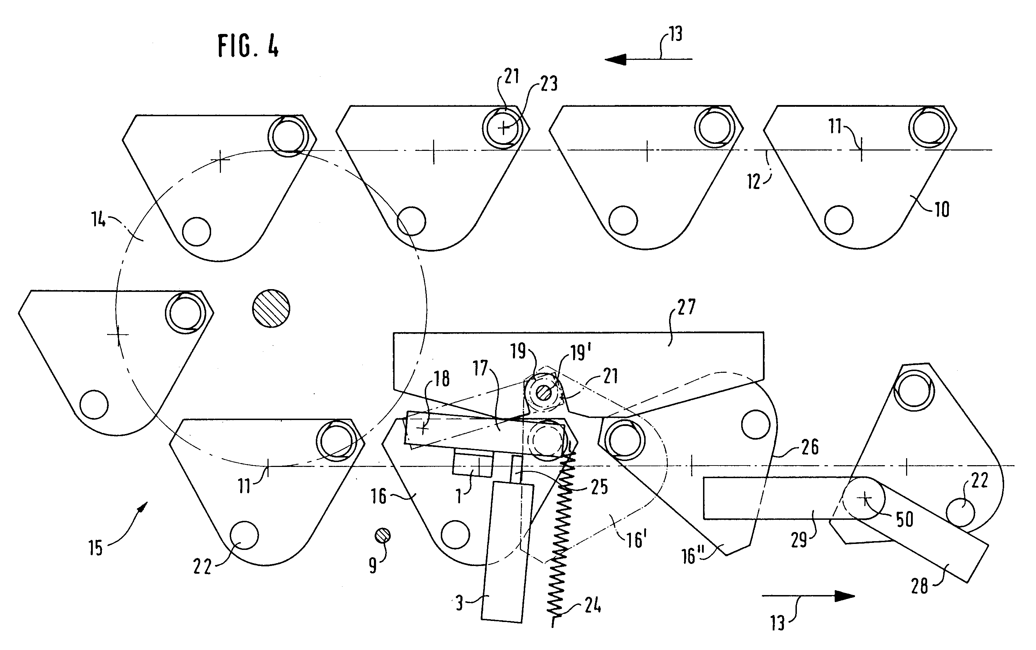

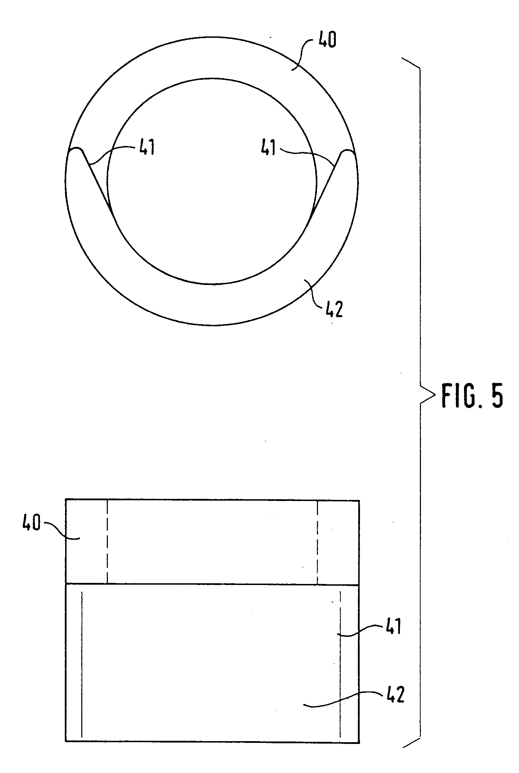

In der Fig. 4 ist in einer Seitenansicht ein gegenüber der Fig. 1 abgewandeltes Pendelbecherwerk gezeigt, bei dem gleiche Teile mit gleichen Bezugszeichen versehen sind, so daß die übereinstimmenden Teile nicht erneut beschrieben werden müssen. Die in der Variante der Fig. 4 verwendete Klaue ist in der Fig. 5 vergrößert in einer Draufsicht und in einer Seitenansicht gezeigt. Die Klaue besteht aus einem geschlossenen Ringteil 40 und einer halbkreisförmig ausgebildeten Klaue 42, deren Enden 41 tangential nach außen verlaufen und an ihrem radial äußeren Ende abgerundet sind. Die halbkreisförmige Klaue 42 ist in ihrer Innenfläche gegen Ablagerung von Material mit einer spiralförmigen Nut und Durchgangsbohrungen versehen. Der geschlossene Ringteil 40 kann als Kugellager ausgebildet sein. Er führt den Pendelbecher 10 unter der Gleitschiene 27. Der Pendelbecher 10 wird in dem mit 16'' bezeichneten, gekippten Zustand durch den ringförmigen Teil 40 der Klaue unter der Gleitschiene 27 gehalten und von dieser Gleitschiene 27 geführt.

Bei der Ausführungsform nach Fig. 4 liegt die Hebel-Drehachse 18 in Pendelbecher-Förderrichtung 13 nicht vor dem zu kippenden Pendelbecher 16, sondern hinter diesem. Auch bei dieser Alternative ist das gleiche Prinzip eines Kurbelgetriebes mit Geradführung wirksam.

Ferner liegen bei der Ausführungsform nach Fig. 4 die Hebel-Drehachse 18, der Zapfen 19 und der Mittelpunkt 23 der Klaue 21 nicht mehr in derselben Höhe. Die Anordnung ist vielmehr derart getroffen, daß der Zapfen 19 und der Mittelpunkt 23 der Klaue 21 etwas tiefer liegen als die Hebel-Drehachse 18. Es versteht sich, daß der Zapfen 19 und der Mittelpunkt 23 der Klaue 21 in derselben Höhe liegen, damit ein einwandfreier Eingriff der auf dem Zapfen 19 drehbar gelagerten Rolle in die Klaue 21 gewährleistet ist.

In der Entladestation gemäß Fig. 4 ist neben der Stange 25 der Kolben-Zylinder-Einheit 3 ein gestellfester Anschlag 1 angeordnet, auf dem der Hebel 17 in seiner unteren Ausgangsposition aufliegt. Der untere Anschlag für den Hebel 17 wird also bei der Ausführungsform gemäß Fig. 4 von dem Anschlag 1 gebildet und nicht vom oberen Ende der Stange 25.

In Förderrichtung hinter der Entladestation ist eine waagerecht verlaufende Schiene 29 gestellfest angeordnet, deren obere Endfläche geringfügig unterhalb des Zuggliedes 12 verläuft. Der in der Stellung 16'' befindliche, gekippte Pendelbecher 10 setzt mit seinem Stift 22 auf dieser Schiene 29 auf. An dem in Förderrichtung 13 hinten liegenden Ende der Schiene 29 ist eine Nase 28 um eine horizontale, quer zur Förderrichtung 13 verlaufende Achse 50 drehbar gelagert. Die Nase 28 besitzt eine ebene obere Fläche, die in Förderrichtung 13 nach unten geneigt verläuft. Der auf der Schiene 29 aufsitzende Stift 22 des Pendelbechers 10 gleitet auf der Nase 28 nach unten und führt den Pendelbecher 10 dadurch in seine Ausgangslage 16 zurück. Dies geschieht verhältnismäßig langsam und auf definierte Weise, so daß der Pendelbecher 10 schonend in seine Ausgangslage 16 überführt wird. Insbesondere wird ein Überschwingen des Pendelbechers vermieden.

Wenn ein Pendelbecher 10 im ungekippten Zustand durch die Entladestation 15 läuft, drückt der Stift 22 des Pendelbechers 10 die bewegliche Nase 28 nach oben, so daß der Pendelbecher 10 die Entladestation 15 ungehindert verlassen kann. Die Nase 28 wird allein durch die Masse des Pendelbechers 10 angehoben bzw. nach unten gedrückt.

Das Ein- bzw. Ausgreifen der Kippvorrichtung in den kontinuierlichen Fördervorgang hängt nicht vom Zeitpunkt des Schaltens des Schalters 31 (Fig. 3) ab, sondern von zwei definierten Meßpunkten in der Gestalt der Näherungsschalter N1 und N2. Das Umsteuern erfolgt über zwei Schütze und ein Impuls-Magnetventil.

Da die Stellung "aus" gegen die Kraft der Feder 24 des Hebels 17 durch die Kolben-Zylinder-Einheit 3 gehalten werden muß, ist die Steuerung gegen Druckabfall durch einen PE-Wandler und ein Rückschlagventil gesichert. Für zusätzliche Sicherheit sorgt eine Endlagenkontrolle in der Kolben-Zylinder-Einheit. Die Kolben-Zylinder-Einheit 3 ist ein doppelt wirkender Druckluftzylinder.

## Patentansprüche

1. Entladestation für ein Pendelbecherwerk, bei dem Pendelbecher (10) an mindestens einem Zugglied (12) um eine horizontale, über ihrem Schwerpunkt liegende Achse (11) drehbar aufgehängt sind, bestehend aus einem am Gestell der Entladestation drehbar gelagerten Hebel (17) mit einem im Abstand von der Hebel-Drehachse (18) angeordneten Zapfen (19), wobei die Hebel-Drehachse (18) oberhalb der Pendelbecher-Drehachse (11) angeordnet ist,
**dadurch gekennzeichnet,**
daß an dem Pendelbecher (10) eine den Zapfen (19) umgreifende Klaue (21) vorgesehen ist.

2. Entladestation nach Anspruch 1, dadurch gekennzeichnet, daß der Zapfen (19) als drehbar gelagerte Rolle ausgebildet ist.

3. Entladestation nach Anspruch 1 oder 2, dadurch gekennzeichnet, daß die Klaue (21) halbkreisförmig ausgebildet ist.

4. Entladestation nach einem der vorhergehenden Ansprüche, dadurch gekennzeichnet, daß die Klaue (21) oberhalb der Pendelbecher-Drehachse (11) angeordnet ist.

5. Entladestation nach einem der vorhergehenden Ansprüche, dadurch gekennzeichnet, daß die Hebel-Drehachse (18) und der Zapfen (19) in derselben Höhe liegen.

6. Entladestation nach einem der vorhergehenden Ansprüche, dadurch gekennzeichnet, daß der Zapfen (19) aus der Bewegungsbahn der Klaue (21) weg bewegbar ist.

7. Entladestation nach einem der vorhergehenden Ansprüche, dadurch gekennzeichnet, daß der Hebel (17) an einem unter dem Hebel (17) vorgesehenen Anschlag (25) anliegt.

8. Entladestation nach einem der vorhergehenden Ansprüche, gekennzeichnet durch eine den Hebel (17) nach unten belastende Feder (24).

9. Entladestation nach Anspruch 7 oder 8, dadurch gekennzeichnet, daß der Anschlag (25) veränderbar ist.

10. Entladestation nach Anspruch 9, dadurch gekennzeichnet, daß der Anschlag von der beweglichen Stange (25) einer Kolben-Zylinder-Einheit oder einer Kolben-Zylinder-Einheit (3) oder eines Magnetventils gebildet wird.

11. Entladestation nach einem der Ansprüche 6 bis 10, dadurch gekennzeichnet, daß der Zapfen (19) nur dann aus der Bewegungsbahn der Klaue (21) weg bewegbar ist, wenn sich der Pendelbecher an einer vorherbestimmten Position befindet.

12. Entladestation nach einem der Ansprüche 6 bis 11, dadurch gekennzeichnet, daß der Zapfen (19) nur dann in die Bewegungsbahn der Klaue (21) bewegbar ist, wenn sich der Pendelbecher an einer vorherbestimmten Position befindet.

13. Entladestation nach Anspruch 11 oder 12, dadurch gekennzeichnet, daß an dem Gestell der Entladestation (15) Positionssensoren (9, 19'), insbesondere induktive Näherungssensoren, zum Erkennen der für das Ausrücken und/oder Einrücken des Zapfens (19) zulässigen Positionen angeordnet sind.

14. Pendelbecherwerk, gekennzeichnet durch eine Entladestation nach einem der vorhergehenden Ansprüche.

## Claims

1. Unloading station for a pivoting tray machine in which pivoting trays (10) are swing-mounted on at least one traction element (12) such that they pivot around a horizontal axis, trunnion (11), located above their centre of gravity, with a pivot-mounted lever (17) located at the frame of the unloading station, with a pin (19) arranged at a distance from the lever pivot (18), the lever pivot (18) being arranged above the pivoting tray trunnion (11),
**characterised in that**
a claw (21) which engages with the pin (19) is provided at the pivoting tray (10).

2. Unloading station according to Claim 1, characterised in that the pin (19) is designed as a rotationally mounted roller.

3. Unloading station according to Claim 1 or 2, characterised in that the claw (21) is of semicircular construction.

4. Unloading station according to one of the preceding claims, characterised in that the claw (21) is arranged above the pivoting tray trunnion (11).

5. Unloading station according to one of the preceding claims, characterised in that the lever pivot (18) and the pin (19) are located at the same height.

6. Unloading station according to one of the preceding claims, characterised in that the pin (19) can be moved away from the operating range of the claw (21).

7. Unloading station according to one of the preceding claims, characterised in that the lever (17) is located by a mechanical stop (25) arranged under said lever (17).

8. Unloading station according to one of the preceding claims, characterised by a spring (24) which applies a downward load to the lever (17).

9. Unloading station according to Claim 7 or 8, characterised in that the mechanical stop (25) is position-adjustable.

10. Unloading station according to Claim 9, characterised in that the mechanical stop is formed by the moving rod (25) of a piston-cylinder unit (3) or of a solenoid valve.

11. Unloading station according to one claims 6 to 10, characterised in that the pin (19) can only be moved away from the operating range of the claw (21) when the pivoting tray is located at a predetermined position.

12. Unloading station according to one of claims 6 to 11, characterised in that the pin (19) can only be moved into the operating range of the claw (21) when the pivoting tray is located at a predetermined position.

13. Unloading station according to Claim 11 or 12, characterised in that arranged at the frame of the unloading station (15) are position sensors (9, 19'), in particular inductive proximity sensors, for detecting the permissible positions for extending and retracting the pin (19).

14. Pivoting tray machine, characterised by an unloading station according to one of the preceding claims.

## Revendications

1. Station de déchargement pour balancelles dans laquelle les balancelles (10) sont suspendues de manière pivotante à au moins un élément de traction (12) autour d'un axe horizontal situé au-dessus de leur centre de gravité, consistant en un levier (17) logé de manière pivotante sur le bâti de la station de déchargement et un pivot (19) disposé à distance de l'axe de pivotement du levier (18), l'axe de pivotement de levier (18) étant disposé au-dessus de l'axe de pivotement des balancelles (11),
**caractérisée en ce que**
un crabot (21) est prévu sur la balancelle (10) qui encercle le pivot.

2. Station de déchargement selon la revendication 1, caractérisée en ce que le pivot (19) est formé comme roulette logée de manière à pouvoir tourner.

3. Station de déchargement selon la revendication 1 ou 2, caractérisée en ce que le crabot (21) est formé de manière semi-circulaire.

4. Station de déchargement selon l'une quelconque des revendications précédentes, caractérisée en ce que le crabot (21) est disposé au-dessus de l'axe de pivotement des balancelles (11).

5. Station de déchargement selon l'une quelconque des revendications précédentes, caractérisée en ce que l'axe pivotant du levier (18) et le pivot (19) sont logés à la même hauteur.

6. Station de déchargement selon l'une quelconque des revendications précédentes, caractérisée en ce que le pivot (19) peut être déplacé hors de la piste de mouvement du crabot (21).

7. Station de déchargement selon l'une quelconque des revendications précédentes, caractérisée en ce que le levier (17) repose contre une butée (25) prévue au-dessous du levier (17).

8. Station de déchargement selon l'une quelconque des revendications précédentes, caractérisée par un ressort (24) pressant le levier (17) vers le bas.

9. Station de déchargement selon les revendications 7 ou 8, caractérisée en ce que la butée (25) peut être modifiée.

10. Station de déchargement selon la revendication 9, caractérisée en ce que la butée (25) est formée par la barre mobile (25) d'une unité piston/cylindre ou d'une unité piston/cylindre (3) ou d'une soupape magnétique.

11. Station de déchargement selon l'une quelconque des revendications 6 à 10, caractérisée en ce que le pivot (19) peut être déplacer hors de la piste de mouvement du crabot (21) seulement lorsque la balancelle se trouve dans une position prédéterminée.

12. Station de déchargement selon l'une quelconque des revendications 6 à 11, caractérisée en ce que le pivot (19) ne peut être déplacé dans la piste de mouvement du crabot (21) que si la balancelle se trouve dans une position prédéterminée.

13. Station de déchargement selon les revendications 11 ou 12, caractérisée en ce que des capteurs de position (9, 19'), notamment des capteurs de rapprochement inductifs pour reconnaître les positions admissibles pour la sortie et/ou la rentrée du pivot (19) sont prévues sur le bâti de la station de déchargement (15).

14. Balancelles, caractérisées par une station de déchargement selon l'une quelconque des revendications précédentes.
